# EUROPÄISCHE PATENTSCHRIFT

(11) **EP 4 560 135 B1**
(45) Veröffentlichungstag und Bekanntmachung des Hinweises auf die Patenterteilung: **03.09.2025**
(21) Anmeldenummer: 23211532.9
(22) Anmeldetag: 22.11.2023
(51) Int. Cl.: F03D 1/06, F03D 13/20

(54) **SCHWINGUNGSTILGERANORDNUNG ZUR REDUKTION DER WEITERLEITUNG VON VIBRATIONEN**
VIBRATION ABSORBER ARRANGEMENT FOR REDUCING THE TRANSMISSION OF VIBRATIONS
AGENCEMENT D'AMORTISSEUR DE VIBRATIONS POUR RÉDUIRE LE TRANSFERT DE VIBRATIONS

(43) Veröffentlichungstag der Anmeldung: 28.05.2025
(73) Patentinhaber: Wölfel Engineering GmbH & Co. KG., 97204 Höchberg (DE)
(72) Erfinder: Zech, Philipp, 97204 Höchberg (DE); Eckstein, Manuel, 97204 Höchberg (DE); Eichelhard, Oliver, 97204 Höchberg (DE)
(74) Vertreter: Keil & Schaafhausen Patentanwälte PartGmbB

(56) Entgegenhaltungen:
- EP-A1- 3 211 218
- EP-B1- 2 238 347
- CN-A- 114 151 274
- US-A1- 2023 154 448

## Beschreibung

Die Erfindung betrifft eine Schwingungstilgeranordnung für ein längliches erstes Bauelement, welches an einem Anschlussende entlang einer Längsrichtung des erstes Bauelements zur mechanischen Verbindung mit einem zweiten Bauelement eingerichtet ist.

Eine typische Windenergieanlage umfasst einen Turm, eine Gondel mit einer Rotornabe und mehrere Rotorblätter, die jeweils an der Rotornabe befestigt sind. Im Betrieb entstehen Vibrationen und die Windenergieanlage gibt Schallemissionen ab. Sogenannte "Tonhaltigkeiten" in den Schallemissionen der Windenergieanlage werden als besonders störend empfunden. Sie können zur Verletzung gesetzlicher Beschränkungen für Geräuschemissionen führen. Unter Umständen muss die Leistung der Windenergieanlage gedrosselt werden, um die Geräuschemissionen zu vermindern. Das führt zu wirtschaftlichen Nachteilen.

Die Ursache der Tonhaltigkeiten sind Schwingungsquellen in einem Antriebsstrang der Windenergieanlage. Der Antriebsstrang umfasst beispielsweise einen Generator und ein Getriebe. Der Antriebstrang, insbesondere der Generator und das Getriebe, sind in der Gondel angeordnet. Die dort erzeugten Vibrationen werden in die Rotorblätter und in den Turm übertragen und darin jeweils weitergeleitet. Die akustischen Hauptabstrahler der Tonhaltigkeiten sind der Turm und die Rotorblätter, nicht die Gondel selbst.

Gemäß einem bekannten Ansatz wird versucht, die Vibrationen bereits direkt am Antriebsstrang zu dämpfen. Bei diesem Ansatz werden die Vibrationen schon reduziert, bevor sie von der Gondel an den Turm und die Rotorblätter weitergegeben werden. Die Schwingungsreduktion direkt am Antriebsstrang ist mittels passiver und aktiver Schwingungstilger möglich. Die Auslegung von aktiven und passiven Schwingungstilgern am Antriebsstrang erfordert zunächst eine Charakterisierung der Tonhaltigkeitsprobleme, also beispielswiese die Ermittlung relevanter Frequenzen und der tonalen Hörbarkeiten. Dann erfolgt üblicherweise eine Untersuchung der Schwingungen am Antriebsstrang im Betrieb mittels einer Vielzahl von Beschleunigungssensoren und Messdaten. Aus den Ergebnissen werden - aufbauend auf den Schwingungsformen im Betrieb und der Akustik - geeignete Positionen für Schwingungstilger abgeleitet. Es folgen eine Analyse des zur Verfügung stehenden Bauraums und Konstruktionsaufgaben zur Implementierung einer Schwingungstilgerlösung an dem Antriebsstrang. Die Auslegung von aktiven und passiven Schwingungstilgern direkt an dem Antriebsstrang ist demnach sehr aufwendig. Zudem besteht das Problem, dass der Bauraum am Antriebsstrang sehr begrenzt ist.

Passive Schwingungstilger an dem Antriebsstrang bringen den Nachteil mit sich, dass sie nur schmalbandig wirken. Sie sind also nur in einem kleinen Frequenzbereich wirkungsvoll. Aktive Schwingungstilger an dem Antriebsstrang sind zwar sehr leistungsfähig, aber auch teuer. Insbesondere für kleinere Tonhaltigkeitsprobleme kann eine Lösung mittels aktivem Schwingungstilger am Antriebsstrang unverhältnismäßig kostenintensiv sein.

US 10,408,194 B2 zeigte ein akustisches Dämpfungssystem für einen Turm einer Windenergieanlage. Der Ansatz besteht darin, den Turm großflächig gegenüber Vibrationen zu dämpfen. Dazu ist es notwendig, Schwingungstilger an allen Stellen des Turms mit Vibrationen über einem gewissen Schwellenwert anzubringen. Die Schwingungstilger müssen großflächig über den Turm verteilt angeordnet werden und an vielen unterschiedlichen Stellen des Turms angebracht sein. Eine derart großflächige Dämpfung mit Schwingungstilgern an vielen unterschiedlichen Stellen des Turms ist aufgrund der hohen Kosten, des hohen zusätzlichen Gewichts der Schwingungstilger und des erforderlichen Aufwandes nachteilig.

Ein anderer Ansatz besteht in der ausreichenden Versteifung des jeweiligen Hauptstrahlers. Aufgrund der dazu erforderlichen hohen Massen, des Aufwandes und der Kosten ist jedoch auch dieser Ansatz mit Nachteilen behaftet.

Aus EP 3 211 218 A1 ist ein akustisches Dämpfungssystem für einen Windturbinenturm bekannt.

Ferner befasst sich EP 2 238 347 A2 mit einem Verfahren zur Verringerung von Schallemissionen von einem Windturbinenturm und mit einer Windturbine.

In CN 114 151 274 A ist ein Rotorblatt für eine Windkraftanlage mit einer Vielzahl von windbeständigen Dämpfungsteilen gezeigt.

US 2023/154448 A1 beschreibt die Reduzierung der Tonalität einer Windenergieeinlage durch die Verwendung von Resonatormodulen zur Reduzierung von Schwingungen mittels destruktiver Interferenz. Die eingesetzten Viertelwellenresonatoren sind prinzipbedingt nur bei Auslegungsfrequenz wirksam. Eine Breitbandigkeit hinsichtlich Frequenzbereich kann damit nicht erreicht werden.

Die Aufgabe der Erfindung besteht darin, die Probleme durch Tonhaltigkeiten bei Windenergieanlagen auf einfache und kostengünstige Weise zu reduzieren.

Die Aufgabe wird gelöst durch eine Schwingungstilgeranordnung mit den Merkmalen des Anspruchs 1.

Die Schwingungstilgeranordnung ist für ein längliches erstes Bauelement, welches an einem Anschlussende (entlang einer Längsrichtung des ersten Bauelements) zur mechanischen Verbindung mit einem zweiten Bauelement eingerichtet ist.

Die Schwingungstilgeranordnung umfasst mindestens drei Tilgergruppen, welche in einem Endabschnitt des ersten Bauelements mit dem Anschlussende angeordnet sind und entlang der Längsrichtung voneinander beabstandet sind.

Dabei umfasst jede der Tilgergruppen eine Vielzahl von einzelnen Schwingungstilgern, die an einer Umfangswand des ersten Bauelements entlang einer Umfangsrichtung verteilt angeordnet sind.

Die Schwingungstilgeranordnung ist zur Reduktion der Weiterleitung von Vibrationen von dem Anschlussende eingerichtet, insbesondere zur Reduktion der Weiterleitung von Vibrationen von dem Anschlussende hin zu einem Abschnitt des ersten Bauelements jenseits des Endabschnitts.

Die Weiterleitung der Vibrationen aufgrund von Schwingungen des Antriebsstranges wird lokal in dem Endabschnitt am Anschlussende, beispielsweise in einem Endabschnitt eines Turmkopfs oder in einem Endabschnitt an einer Blattwurzel eines Rotorblatts reduziert. An dem ersten Bauelement, beispielsweise dem Turm oder dem Rotorblatt, muss jenseits des Endabschnitts keine weitere Schwingungsdämpfung implementiert zu werden. Das erste Bauelement braucht also nicht "global" gedämpft zu werden. Das sorgt für niedrige Kosten.

Die Schwingungstilgeranordnung schirmt den Rest des ersten Bauelements ab von den Vibrationen, die an dem Anschlussende eingebracht werden.

Die Erfindung wird im Folgenden anhand des Einsatzes in einer Windenergieanlage beschrieben. Sie ist aber auch bei anderen schlanken Bauwerken und Bauelementen anwendbar.

Gemäß einem Aspekt kann das erste Bauelement zumindest teilweise hohl sein.

In einer Ausführungsform sind die einzelnen Schwingungstilger der jeweiligen Tilgergruppe ringförmig angeordnet. Jede Tilgergruppe bildet einen "Tilgerring". Die Tilgerringe sind in der Längsrichtung voneinander beabstandet. Alle Tilgerringe sind in dem Endabschnitt angeordnet. Das erlaubt eine einfache Planung und Installation.

Erfindungsgemäß umfasst die Schwingungstilgeranordnung mindestens drei Tilgergruppen (bspw. Tilgerringe). Insbesondere kann die Schwingungstilgeranordnung mindestens fünf Tilgergruppen (bspw. Tilgerringe) umfassen.

In einer Ausführungsform umfasst die Schwingungstilgeranordnung maximal zwölf Tilgergruppen (bspw. Tilgerringe). Es hat sich gezeigt, dass sich die Tonhaltigkeiten damit ausreichend bewältigen lassen. Eine geringere Anzahl von Tilgergruppen spart Aufwand und Kosten.

Gemäß einem Aspekt können einzelne Schwingungstilger im Endabschnitt in Längsrichtung voneinander beabstandet hintereinander angeordnet werden. Die "Längsinstallation" wird in der Umfangsrichtung jeweils in Winkelabständen voneinander beabstandet wiederholt, bevorzugt um den kompletten Umfang herum. Dadurch werden die entlang der Längsrichtung voneinander beabstandeten Tilgergruppen gebildet.

Gemäß einem Aspekt können sind die einzelnen Schwingungstilger der jeweiligen Tilgergruppe gleichmäßig entlang der Umfangsrichtung verteilt angeordnet sein. Sie können beispielsweise in gleichen Abständen entlang der Umfangsrichtung und/oder in gleichen Winkelabständen rund um eine (ggf. lokale) Längsachse und/oder Mittelachse des ersten Bauelements an der Stelle des jeweiligen Tilgerrings angeordnet sein.

Das zweite Bauelement ist eine Windenergieanlagen-Gondel mit einem Antriebsstrang. Das Anschlussende ist das gondelseitige Ende des ersten Bauelements. Der Endabschnitt ist ein gondelseitiger Endabschnitt. Obwohl die Ursache der Tonhaltigkeiten der Windenergieanlage Schwingungsquellen im Antriebsstrang in der Gondel sind, ist die Gondel nicht der akustische Hauptabstrahler der störenden Schallemissionen. Die akustischen Hauptabstrahler sind der Turm und die Rotorblätter der Windenergieanlage. Es genügt, die Weiterleitung der Vibrationen im gondelseitigen Endabschnitt zu reduzieren. Zwar können die Vibrationen an dem Anschlussende (am gondelseitigen Ende) des ersten Bauelements noch auf das erste Bauelement übergehen, ihre Weiterleitung in dem ersten Bauelement wird jedoch noch im (gondelseitigen) Endabschnitt reduziert. Sie können sich nicht frei entfalten und ein Risiko der Emission störender Tonhaltigkeiten wird vermindert. In der Gondel selbst kann gegebenenfalls auf einen aktiven und/oder Schwingungstilger verzichtet werden. Das spart Kosten und Bauraum in der Gondel.

In einer Ausführungsform ist das erste Bauelement ein Windenergieanlagen-Turm und das Anschlussende ist ein oberes Ende des Windenergieanlagen-Turms zum Stützen der Windenergieanlagen-Gondel.

Der Windenergieanlagen-Turm ist ein Turm einer Windenergieanlage bzw. ein Turm für eine Windenergieanlage.

In diesem Fall ist der Endabschnitt ein oberer Bereich des Turms (ein Turmkopf). Die Schwingungstilgeranordnung kann komplett lokal im Turmkopf installiert sein. Auf dem Turmkopf sitzt die Gondel. Über die Verbindung treten Vibrationen von der Gondel auf den Turmkopf über, werden aber durch die Schwingungstilgeranordnung noch innerhalb des Turmkopfs reduziert.

Insbesondere, wenn das erste Bauelement der Turm ist, können gemäß einem Aspekt benachbarte Tilgergruppen entlang der Längsrichtung um weniger als 300 cm, beispielsweise um weniger als 110 cm voneinander beabstandet sein. Alternativ oder zusätzlich können die einzelnen Schwingungstilger innerhalb der jeweiligen Tilgergruppe entlang der Umfangsrichtung um weniger als 200 cm, beispielsweise um weniger als 66 cm voneinander beabstandet sein.

Für beispielhafte Türme aus Stahl mit Gesamthöhen zwischen 50 m und 150 m, mittleren Durchmessern zwischen 3 m und 5 m sowie mittleren Wandstärken zwischen 2 cm und 5 cm hat sich gezeigt, dass derartige Anordnungen vorteilhaft sind. Beispielsweise helfen die oben genannten Kriterien jeweils, eine Reduktion der Vibrationen im wichtigen Frequenzbereich um 100 Hz zu realisieren.

Gemäß einem anderen Aspekt kann das zweite Bauelement die Windenergieanlagen-Gondel mit einer Rotornabe sein. Das erste Bauelement kann ein Windenergieanlagen-Rotorblatt sein, wobei das Anschlussende eine Blattwurzel (des Rotorblatts) zur Befestigung an der Rotornabe ist.

Das Windenergieanlagen-Rotorblatt ist ein Rotorblatt einer Windenergieanlage bzw. ein Rotorblatt für eine Windenergieanlage.

Insbesondere, wenn das erste Bauelement das Rotorblatt ist, können gemäß einem Aspekt benachbarte Tilgergruppen entlang der Längsrichtung um weniger als 300 cm, beispielsweise um weniger als 90 cm voneinander beabstandet sein. Alternativ oder zusätzlich können die einzelnen Schwingungstilger innerhalb der jeweiligen Tilgergruppe entlang der Umfangsrichtung um weniger als 100 cm, beispielsweise um weniger als 34 cm voneinander beabstandet sein. Dies gilt für 50 m lange Blätter mit mittleren Durchmessern zwischen 0,5 m und 1,5 m sowie einer Wandstärke zwischen 1 cm und 3 cm.

Eine signifikante Reduktion der Weiterleitung von Vibrationen wird erreicht, wenn Höchstabstände der einzelnen Schwingungstilger innerhalb einer jeweiligen Tilgergruppe in Umfangsrichtung und Höchstabstände (entlang der Längsrichtung) zwischen den Tilgergruppen nicht überschritten werden. Die Höchstabstände können mittels Simulation und/oder messtechnisch ermitteln werden. Sie können sich für verschiedene Varianten von Türmen bzw. Rotorblättern unterscheiden.

Gemäß einem Aspekt sind die Tilgergruppen (die einzelnen Schwingungstilger) an einer Innenseite der Umfangswand angebracht. Das schützt die Schwingungstilger vor Witterungseinflüssen und erleichtert die Installation.

In einer Weiterbildung liegen Eigenfrequenzen der Tilgergruppen in einem Bereich von 50 Hz bis 500 Hz. In der Praxis sind Vibrationen in diesem Bereich häufig für störende Tonhaltigkeiten verantwortlich, deshalb sollte Ihre Weiterleitung besonders reduziert werden.

Innerhalb der jeweiligen Tilgergruppe können alle einzelnen Schwingungstilger die gleiche Eigenfrequenz aufweisen. Alternativ oder zusätzlich können innerhalb der jeweiligen Tilgergruppe alle einzelnen Schwingungstilger vom gleichen Typ sein. Insbesondere können innerhalb der jeweiligen Tilgergruppe alle einzelnen Schwingungstilger baugleich sein.

Die Eigenfrequenz des jeweiligen einzelnen Schwingungstilgers ist anhand einer Tilgermasse und einer Steifigkeit des einzelnen Schwingungstilgers ausgelegt.

Erfindungsgemäß weisen die Tilgergruppen voneinander unterschiedliche Eigenfrequenzen auf. Jede Tilgergruppe hat eine individuelle Eigenfrequenz. Das ermöglicht eine weitbandigere Reduktion von Vibrationen bzw. eine Reduktion in mehreren Frequenzbereichen. In einer Ausführungsform ist jede der Eigenfrequenzen der Tilgergruppen jeweils auf eine Zielfrequenz ausgelegt, um die Tonhaltigkeit der Windenergieanlage zu mindern.

Die einzelnen Schwingungstilger einer jeweiligen Tilgergruppe unterscheiden sich in ihrer Tilgermasse und/oder in ihrer Steifigkeit von den einzelnen Schwingungstilgern der anderen Tilgergruppen. Das ist ein effektiver Ansatz, um die Reduktion von Vibrationen für verschiedene Frequenzen bzw. Frequenzbereiche zu implementieren.

Die jeweilige Tilgergruppe weist einen Frequenzreduktionsbereich um ihre Eigenfrequenz auf. Erfindungsgemäß überlappt der Frequenzreduktionsbereich einer jeweiligen der Tilgergruppe mindestens mit einem der Frequenzreduktionsbereiche einer anderen der Tilgergruppen. Der Frequenzreduktionsbereich kann den Frequenzbereich um die Eigenfrequenz umfassen, bis eine Reduktion auf 80% der Reduktion an der Eigenfrequenz abgefallen ist.

Gemäß einem weiteren Aspekt umfasst jede Tilgergruppe mindestens 5 Schwingungstilger. Das hilft, eine hohe Reduktion der Weiterleitung von Vibrationen zu ermöglichen.

In einer Weiterbildung ist mindestens einer der Tilgergruppen in einem Bereich angeordnet, der sich von dem Anschlussende ausgehend über 10 % einer Gesamtlänge des ersten Bauelements entlang der Längsrichtung erstreckt. Dadurch wird zumindest ein Teil der Vibrationen in unmittelbarer Nähe des Anschlussendes reduziert, an welchem die Vibrationen in das erste Bauelement eingebracht werden. Insbesondere können mindestens zwei oder sogar mindestens drei der Tilgergruppen in dem Bereich angeordnet sein, der sich von dem Anschlussende ausgehend über 10 % der Gesamtlänge des ersten Bauelements entlang der Längsrichtung erstreckt.

In einer Ausführungsform erstreckt sich der Endabschnitt von dem Anschlussende ausgehend über maximal 14 %. Der Endabschnitt erstreckt sich nicht weit von dem Anschlussende weg. Die Reduktion der Vibrationen erfolgt nahe dem Anschlussende, an welchem die für die Tonhaltigkeiten maßgeblichen Schwingungen eingebracht werden. So wird verhindert, dass das erste Bauelement großflächig als starker akustischer Hauptabstrahler wirkt.

Alternativ oder zusätzlich kann die Schwingungstilgeranordnung komplett in dem Endabschnitt angeordnet sein. Alle einzelnen Schwingungstilger der Schwingungstilgeranordnung sind ausschließlich innerhalb des Endabschnitts angeordnet. Außerhalb des Endabschnitts weist die Schwingungstilgeranordnung keine Schwingungstilger an dem ersten Bauelement auf.

In einer Weiterbildung sind alle einzelnen Schwingungstilger passive Schwingungstilger. Passive Schwingungstilger sind einfacher auszulegen und kostengünstiger. Durch das Vorsehen mehrerer Tilgergruppen lässt sich der Nachteil der Schmalbandigkeit ausgleichen. Die passiven Schwingungstilger können die Tilgermasse und eine Steifigkeit aufweisen. Die Tilgermasse ist über die Steifigkeit mechanisch an das erste Bauelement gekoppelt. Die passiven Schwingungstilger können aus Metall gefertigt sein, beispielsweise aus Stahl. Sie können Stahlsteifigkeiten aufweisen.

Über die Abstände der Tilgergruppen entlang der Längsrichtung, die Anzahlen der einzelnen Schwingungstilger pro Tilgergruppe, die Tilgermassen der einzelnen Schwingungstilger, die Anzahl der Tilgergruppen sowie die Abstimmung der Eigenfrequenzen der Tilgergruppen können sowohl der Frequenzbereich (bzw. die Frequenzbereiche) als auch eine gewünschte Amplitudenreduktion ausgelegt werden.

Die einzelnen Schwingungstilger können jeweils mittels Magnetfuß, Kleben, Schrauben und/oder Schweißen an dem ersten Bauelement befestigt sein.

Das oben genannte Problem wird ferner gelöst durch ein erstes Bauelement, beispielsweise einen Windenergieanlagen-Turm oder ein Windenergieanlagen-Rotorblatt, welches die Schwingungstilgeranordnung gemäß einer der beschriebenen Ausführungsformen umfasst.

Das oben genannte Problem wird außerdem gelöst durch eine Windenergieanlage mit einer Schwingungstilgeranordnung gemäß einer der beschriebenen Ausführungsformen umfasst.

Die zuvor beschriebenen Ausführungsformen und Vorteile gelten jeweils entsprechend.

Die Erfindung wird nachfolgend anhand von Ausführungsbeispielen und unter Bezugnahme auf die Figuren erläutert.

Es zeigen schematisch:
- Fig. 1: eine Windenergieanlage mit einem Turm, einer Gondel und mehreren Rotorblättern, wobei der Turm und die Rotorblätter jeweils eine Schwingungstilgeranordnung aufweisen;
- Fig. 2: eine Ausführungsform einer Schwingungstilgeranordnung für den Turm der Windenergieanlage in Fig. 1.

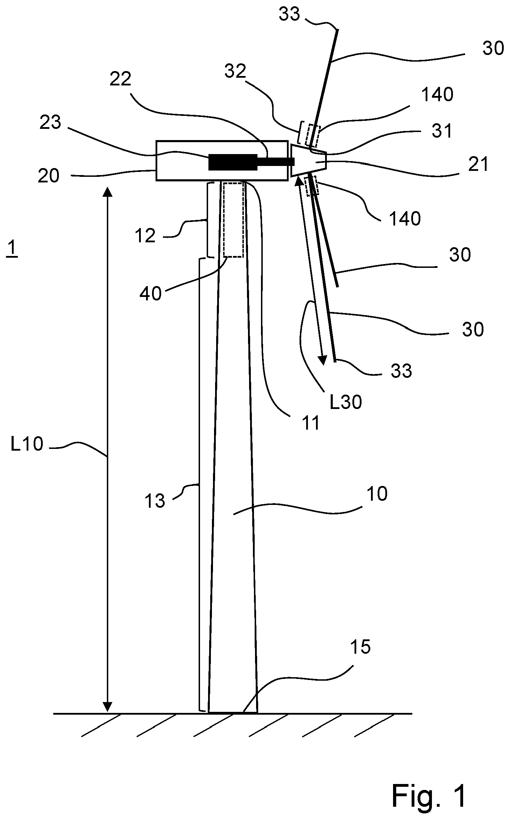

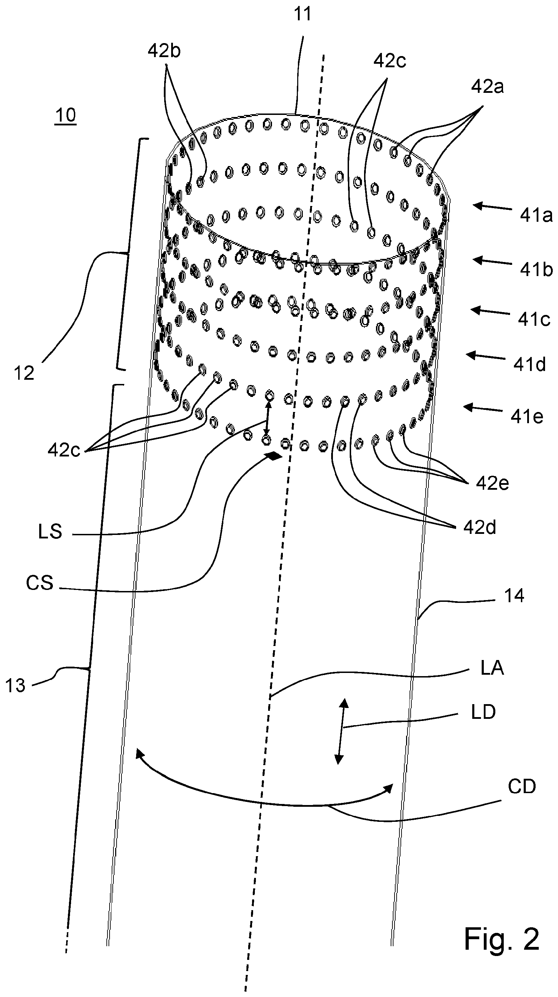

Fig. 1 zeigte eine Seitenansicht einer Ausführungsform einer Windenergieanlage 1 mit einem Turm 10, einer Gondel 20 und mehreren Rotorblättern 30, hier genauer gesagt mit drei Rotorblättern 30. Der Turm 10 erstreckt sich entlang einer Längsrichtung LD (siehe Fig. 2) mit einer Gesamtlänge L10 von einem unteren Ende 15 am Boden vertikal nach oben bis zu einem oberen Ende. Das obere Ende bildet ein Anschlussende 11 für die Gondel 20. Die Gondel 20 ist auf das Anschlussende 11 des Turms 10 aufgesetzt.

Die Gondel 20 umfasst eine Rotornabe 21. Die Rotorblätter 30 sind jeweils mit ihrer Blattwurzel 31 an der Rotornabe 21 befestigt. Für die Rotorblätter 30 ist die Blattwurzel 31 das "Anschlussende" für die Befestigung an der Gondel 20 (genauer an deren Rotornabe 21). Die Rotorblätter 30 erstecken sich jeweils entlang ihrer Längsrichtung über eine Gesamtlänge L30 von der Blattwurzel 31 weg. In Fig. 1 ist die Längsrichtung für die Rotorblätter 30 nicht separat eingezeichnet. Für das untere Rotorblatt 30 ist die Längsrichtung parallel zu einem Pfeil, der die Gesamtlänge L30 anzeigt.

In der Gondel 20 befindet sich ein Antriebsstrang, der beispielsweise ein Getriebe 22 und einen Generator 23 umfasst. Im Betrieb der Windenergieanlage 1 sorgt der Antriebstrang für Schwingungen bzw. Vibrationen. Die Vibrationen werden an dem Anschlussende 11 (dem oberen Ende) des Turms 10 in den Turm 10 eingebracht. Ferner werden sie über die Rotornabe 21 und die Blattwurzeln 31 der Rotorblätter 30 eingebracht. Wenn keine Maßnahmen getroffen werden, dann können der Turm 10 und die Rotorblätter 30 als Hauptabstrahler von Schallemissionen störender Tonhaltigkeiten in Erscheinung treten.

Zur Reduktion der Weiterleitung von Vibrationen von dem Anschlussende 11 (dem oberen Ende) des Turms 10, auf welchem die Gondel 20 ruht, in einen Hauptbereich 13 des Turms 10 ist in einem oberen Endabschnitt 12 des Turms 10 eine Schwingungstilgeranordnung 40 installiert. Der Endabschnitt 12 des Turms 10 schließt unmittelbar an das Anschlussende 11 (das obere Ende) des Turms 10 mit der Gondel 20 an. Der Endabschnitt 12 des Turms 10 an dem Anschlussende 11 bildet sozusagen einen "Turmkopf".

Für die Schwingungstilgeranordnung 40 bildet der Turm 10 ein längliches erstes Bauelement zur Verbindung mit einem zweiten Bauelement, nämlich der Gondel 20, an dem Anschlussende 11 des Turms 10.

Für die Schwingungstilgeranordnungen 140 bildet das jeweilige Rotorblatt 30 ein längliches erstes Bauelement zur Verbindung mit dem zweiten Bauelement, nämlich der Gondel 20, an dem Anschlussende, nämlich der jeweiligen Blattwurzel 31.

Der Turm 10 ist zumindest teilweise "hohl". Er bildet zumindest abschnittsweise einen Turminnenraum aus. Auch die Rotorblätter 30 können zumindest teilweise "hohl" sein. Sie bilden zumindest abschnittsweise einen jeweiligen Blattinnenraum aus.

Fig. 2 zeigt die Schwingungstilgeranordnung 40 im Detail. Sie ist komplett in dem Turmkopf 20 installiert.

Die Schwingungstilgeranordnung 40 umfasst eine Vielzahl von Tilgergruppen 41a, 41b, 41c, 41d, 41e. Hier sind exemplarisch fünf Tilgergruppen 41a, 41b, 41c, 41d, 41e gezeigt. Alle Tilgergruppen 41a, 41b, 41c, 41d, 41e sind ausschließlich in dem Endabschnitt 12 des Turms 10 an dem Anschlussende 11 installiert, also im Turmkopf.

Jede Tilgergruppe 41a, 41b, 41c, 41d, 41e umfasst eine Vielzahl von einzelnen Schwingungstilgern 42a, 42b, 42c, 42d, 42e. Die einzelnen Schwingungstilger 42a, 42b, 42c, 42d, 42e der jeweiligen Tilgergruppe 41a, 41b, 41c, 41d, 41e sind an einer Umfangswand 14 des ersten Bauelement, hier also des Turms 10, installiert. Genauer sind sie in diesem Beispiel an einer Innenseite der Umfangswand 14 befestigt. Dabei sind die einzelnen Schwingungstilger 42a, 42b, 42c, 42d, 42e der jeweiligen Tilgergruppe 41a, 41b, 41c, 41d, 41e entlang einer Umfangsrichtung CD verteilt angeordnet, in diesem Ausführungsbeispiel in gleichen Abständen entlang der Umfangsrichtung. Die einzelnen Schwingungstilger 42a, 42b, 42c, 42d, 42e der jeweiligen Tilgergruppe 41a, 41b, 41c, 41d, 41e sind hier ringförmig angeordnet, weiter im Detail ringförmig um eine Längsachse LA des ersten Bauelements (hier des Turms 10). Jede der Tilgergruppen 41a, 41b, 41c, 41d, 41e bildet also mit der Vielzahl der zugehörigen einzelnen Schwingungstilger 42a, 42b, 42c, 42d, 42e einen individuellen "Tilgerring".

So umfasst beispielsweise eine erste Tilgergruppe 41a (der erste Tilgerring), die dem Anschlussende 11 am nächsten liegt, eine Vielzahl von ersten einzelnen Schwingungstilgern 42a. Die erste Tilgergruppe 41 muss nicht unmittelbar an dem Anschlussende 11 installiert sein. Sie kann aber beispielsweise unmittelbar an dem Anschlussende 11 oder unmittelbar in der Nähe des Anschlussendes 11 installiert sein. Eine benachbarte zweite Tilgergruppe 42b (ein zweiter Tilgerring) umfasst eine Vielzahl von zweiten einzelnen Schwingungstilgern 42b, und so weiter.

Die Tilgergruppen 41a, 41b, 41c, 41d, 41e sind entlang der Längsrichtung LD voneinander beabstandet. In diesem Abstand sind alle benachbarten Tilgergruppen 41a, 41b, 41c, 41d, 41e gleichmäßig mit einem Längsabstand LS voneinander beabstandet. In Modifikationen (nicht gezeigt), können sich die Längsabstände einzelner benachbarter Tilgergruppen 41a, 41b, 41c, 41d, 41e oder aller benachbarter Tilgergruppen 41a, 41b, 41c, 41d, 41e unterscheiden.

In dieser Ausführungsform existiert in den Längsabständen LS zwischen benachbarten Tilgergruppen 41a, 41b, 41c, 41d, 41e jeweils ein "tilgerfreier Bereich" ohne einzelne Schwingungstilger 42a, 42b, 42c, 42d, 42e.

Jede der Tilgergruppen 41a, 41b, 41c, 41d, 41e hat eine eigene Eigenfrequenz. Dabei sind die Eigenfrequenzen aller Tilgergruppen 41a, 41b, 41c, 41d, 41e unterschiedlich. Dadurch ermöglicht die Schwingungstilgeranordnung eine Reduktion von Vibrationen mehrerer unterschiedlicher Frequenzen bzw. in mehreren verschiedenen Frequenzbereichen. Die einzelnen Eigenfrequenzen können jeweils auf eine bestimmte Tonhaltigkeit ausgelegt sein.

In dem vorliegenden Beispiel umfassen alle einzelnen Schwingungstilger 42a, 42b, 42c, 42d, 42e jeweils eine Tilgermasse und eine Steifigkeit. Die Tilgermasse ist mittels der Steifigkeit, beispielsweise einer Stahlsteifigkeit, an einer Umfangswand 14 des Turms 10 befestigt, hier an einer Innenseite der Umfangswand 14. Die einzelnen Schwingungstilger 42a, 42b, 42c, 42d, 42e einer jeweiligen der Tilgergruppen 41a, 41b, 41c, 41d, 41e haben dieselbe Eigenfrequenz, nämlich die Eigenfrequenz dieser Tilgergruppe 41a, 41b, 41c, 41d, 41e. Die Eigenfrequenz der einzelnen Schwingungstilger 42a, 42b, 42c, 42d, 42e und damit der jeweiligen Tilgergruppen 41a, 41b, 41c, 41d, 41e lässt sich anhand einer Größe der Tilgermasse und/oder anhand einer Steifigkeit verändern und somit gezielt auslegen. Gemäß einem Aspekt können alle einzelnen Schwingungstilger 42a, 42b, 42c, 42d, 42e derselben Tilgergruppe 41a, 41b, 41c, 41d, 41e jeweils vom selben Typ sein, insbesondere baugleich. Das reduziert die Kosten.

Hier unterscheiden sich die die einzelnen Schwingungstilger 42a, 42b, 42c, 42d, 42e einer jeweiligen Tilgergruppe 41a, 41b, 41c, 41d, 41e in ihrer Tilgermasse und/oder in ihrer Steifigkeit von den einzelnen Schwingungstilgern 42a, 42b, 42c, 42d, 42e der anderen Tilgergruppen 41a, 41b, 41c, 41d, 41e.

Gemäß einem anderen Aspekt sind in dem Endabschnitt 12 an der Umfangswand 14 entlang der Längsrichtung LD voneinander beabstandet hintereinander einzelne (bspw.) Schwingungstilger 42a, 42b, 42c, 42d, 42e mit unterschiedlichen Eigenfrequenzen installiert. Durch Wiederholung dieser linearen "Tilgerkette" entlang der Umfangsrichtung, beispielsweise in gleichmäßigen Winkelabstände um die Längsachse LA, kann die Schwingungstilgeranordnung 40 gebildet sein.

In Fig. 2 sind alle einzelnen Schwingungstilger 42a, 42b, 42c, 42d, 42e als passive Schwingungstilger ausgeführt. Das mach die Schwingungstilgeranordnung 40 besonders kostengünstig, einfach und zuverlässig.

Im Allgemeinen muss die erste Tilgergruppe 41a nicht unmittelbar an oder unmittelbar in der Nähe des Anschlussendes 11 angeordnet sein. Es kann jedoch optional vorgesehen sein, dass zumindest die erste Tilgergruppe 41a in einem Bereich angeordnet ist, der sich in der Längsrichtung L10 von dem Anschlussende 11 ausgehend nur über 10 % der Gesamtlänge L10 des ersten Bauelements (hier des Turms 10) erstreckt. Bei der Ausführungsform In Fig. 2 ist die erste Tilgergruppe 41a sogar unmittelbar an dem Anschlussende 11 oder unmittelbar in der Nähe des Anschlussendes 11 angeordnet. Ferner ist zumindest auch die zweite Tilgergruppe 41b in dem Bereich angeordnet, der sich in der Längsrichtung L10 von dem Anschlussende 11 ausgehend nur über 10 % der Gesamtlänge L10 des ersten Bauelements (hier des Turms 10) erstreckt. Auch eine dritte Tilgergruppe 41c, die der zweiten Tilgergruppe 41b entlang der Längsrichtung LD auf der anderen Seite als die erste Tilgergruppe 41a benachbart ist, kann in diesem Bereich angeordnet sein.

In dieser exemplarischen Ausführungsform erstreckt sich der Endabschnitt 12, in welchem alle Tilgergruppen 41a, 41b, 41c, 41d, 41e angeordnet sind, von dem Anschlussende 11 ausgehend über maximal 14 % der Gesamtlänge L10 des ersten Bauelement 10 entlang der Längsrichtung LD, beispielsweise über maximal 14 %. Der Hauptbereich 13 des ersten Bauelements, hier des Turms 10, ist entsprechend groß. Da die Reduktion der Weiterleitung der Vibrationen in dem verhältnismäßig kurzen Endabschnitt 12 direkt an dem Anschlussende 11 erfolgt, erreicht ein wegreduzierter Anteil der für die Tonhaltigkeiten relevanten Vibrationen den viel größeren Hauptbereich 13 gar nicht. Der Hauptbereich 13 kann also nicht oder nur stark abgemildert als problematische akustischer Abstrahler in Erscheinung treten. Ein Vorteil liegt darin, dass in dem Hauptbereich 13 keinerlei Tilgergruppen 41a, 41b, 41c, 41d, 41e und keinerlei einzelne Schwingungstilger 42a, 42b, 42c, 42d, 42e installiert sein müssen. Der Hauptbereich 13 ist in der gezeigten Ausführungsform "tilgerfrei". Das bedeutet erheblich weniger Aufwand und Kosten als bei einer großflächigen Dämpfung des Turms 10.

Die Auslegung der Schwingungsanordnung 40 hängt im Allgemeinen von den Dimensionen, der Form, und den Materialen des Turms 10 ab. Im Folgenden werden rein beispielhafte Ausführungsformen beschrieben.

Angenommen, für Türme 10, die (zumindest im Wesentlichen) aus Stahl gefertigt sind und Gesamtlängen L0 zwischen 50 m und 150 m, mittlere Durchmesser zwischen 3 m und 5 m sowie mittlere Wandstärken (der Umfangswand 14) zwischen 2 cm und 5 cm aufweisen, soll eine gute Reduktion der Weiterleitung von Vibrationen mit 100 Hz erreicht werden. Dann sollte der Längsabstand LS kleiner als 300 cm, noch besser kleiner als 110 cm sein. Die einzelnen Schwingungstilger 42a, 42b, 42c, 42d, 42e der jeweiligen Tilgergruppe 41a, 41b, 41c, 41d, 41e sollten entlang der Umfangsrichtung CD einen Umfangsabstand CS von weniger als 200 cm, noch besser weniger als 66 cm haben.

Angenommen, der Turm 10 sei (zumindest im Wesentlichen) aus Stahl und 50 m hoch, habe einen mittleren Durchmesser von 6 m und eine mittlere Wandstärke von 3 cm. Ferner solle die Schwingungstilgeranordnung 40 die Weiterleitung von Vibrationen in einem in einem Frequenzbereich um 250 Hz reduzieren. Dann sollte der Längsabstand LS kleiner als 86 cm sein. Der Umfangsabstand CS (entlang der Umfangsrichtung CD) der einzelnen Schwingungstilger 42a, 42b, 42c, 42d, 42e der jeweiligen Tilgergruppe 41a, 41b, 41c, 41d, 41e sollte kleiner als 55 cm sein.

Angenommen, der Turm 10 sei 100 m hoch, habe einen mittleren Durchmesser von 4 m und eine mittlere Wandstärke von 3 cm. Ferner solle die Schwingungstilgeranordnung 40 die Weiterleitung von Vibrationen im Bereich von 95 Hz bis 105 Hz von dem Anschlussende 11 zu dem Hauptbereich 13 um (mindestens) 10 dB reduzieren. Dies kann beispielsweise erreicht werden, wenn die Schwingungstilgeranordnung 40 ein relatives Gewicht im Bereich von 0,1 % bis 0,2 % verglichen mit einem Gewicht des Turms 10 hat. In einer beispielhaften Implementierung besteht die Schwingungstilgeranordnung 40 aus 80 Tilgergruppen 41a, 41b, 41c, 41d, 41e, welche jeweils aus jeweils circa 280 einzelnen Schwingungstilgern 42a, 42b, 42c, 42d, 42e bestehen. Insgesamt besteht die Schwingungstilgeranordnung aus circa 22.400 einzelnen Schwingungstilgern 41a, 41b, 41c, 41d, 41e zu je 28 g Tilgermasse. Der Endabschnitt 11 erstreckt sich nur über die obersten 10 m des Turms 10. Alle 80 Tilgergruppen 41a, 41b, 41c, 41d, 41e sind in den obersten 10 m des Turms 10 installiert.

Die Schwingungstilgeranordnungen 140 an den Blattwurzeln 31 der Rotorblätter 30 sind gleichartig aufgebaut wie die Schwingungstilgeranordnung 40 im Turmkopf. Aufgrund der kleineren Dimensionen der Rotorblätter 30 können auch die Abstände der Schwingungstilgeranordnungen 140 anders ausfallen, insbesondere kleiner sein. Die Auslegung der Schwingungsanordnungen 140 hängt im Allgemeinen von den Dimensionen, den Formen, und den Materialien der Rotorblätter 30 ab. Im Folgenden wird eine rein beispielhafte Ausführungsformen beschrieben.

Angenommen, das Rotorblatt 30 sei (zumindest im Wesentlichen) aus glasfaserverstärktem Kunststoff, 50 m lang, habe einen mittleren Durchesser im Bereich von 0,5 m bis 1,5 m und eine mittlere Wandstärke zwischen 1 cm und 3 cm. Ferner solle die Schwingungstilgeranordnung 140 die Weiterleitung von Vibrationen in einem Frequenzbereich um 100 Hz reduzieren. Dann sollte der Längsabstand der Tilgergruppen kleiner als 300 cm, noch besser kleiner als 90 cm sein. Der Umfangsabstand (entlang der Umfangsrichtung) der einzelnen Schwingungstilger der jeweiligen Tilgergruppe sollte kleiner als 100 cm, noch besser kleiner als 34 cm sein.

## Patentansprüche

1. Schwingungstilgeranordnung (40; 140) für ein längliches erstes Bauelement (10; 30), welches an einem Anschlussende (11; 31) entlang einer Längsrichtung (LD) des ersten Bauelements (10; 30) zur mechanischen Verbindung mit einem zweiten Bauelement (20) eingerichtet ist, wobei das zweite Bauelement (20) eine Windenergieanlagen-Gondel mit einem Antriebsstrang (22, 23) ist.
wobei die Schwingungstilgeranordnung (40; 140) mindestens drei Tilgergruppen (41a, 41b, 41c, 41d, 41e) umfasst, welche in einem Endabschnitt (12; 32) des ersten Bauelements (10; 30) mit dem Anschlussende (11; 31) angeordnet sind und entlang der Längsrichtung (LD) voneinander beabstandet sind,
wobei jede der Tilgergruppen (41a, 41b, 41c, 41d, 41e) eine Vielzahl von einzelnen Schwingungstilgern (42a, 42b, 42c, 42d, 42e) umfasst, die an einer Umfangswand (14) des ersten Bauelements (10; 30) entlang einer Umfangsrichtung (CD) verteilt angeordnet sind,
wobei die Eigenfrequenzen des jeweiligen einzelnen Schwingungstilgers (42a, 42b, 42c, 42d, 42e) anhand einer Tilgermasse und einer Steifigkeit des einzelnen Schwingungstilgers (42a, 42b, 42c, 42d, 42e) ausgelegt sind,
wobei die Schwingungstilgeranordnung (40; 140) dazu eingerichtet ist, eine Weiterleitung von Vibrationen aufgrund von Schwingungen des Antriebsstranges (22, 23) lokal in dem Endabschnitt (12; 32) an dem Anschlussende (11; 31) zu reduzieren,
**dadurch gekennzeichnet, dass** die Tilgergruppen (41a, 41b, 41c, 41d, 41e) voneinander unterschiedliche Eigenfrequenzen aufweisen, und sich die einzelnen Schwingungstilger (42a, 42b, 42c, 42d, 42e) einer jeweiligen Tilgergruppe (41a, 41b, 41c, 41d, 41e) in ihrer Tilgermasse und/oder in ihrer Steifigkeit von den einzelnen Schwingungstilgern (42a, 42b, 42c, 42d, 42e) der anderen Tilgergruppen (41a, 41b, 41c, 41d, 41e) unterscheiden, und
dass die jeweilige Tilgergruppe (41a, 41b, 41c, 41d, 41e) einen Frequenzreduktionsbereich um Ihre Eigenfrequenz aufweist, wobei sich die Frequenzreduktionsbereiche einer jeweiligen der Tilgergruppen (41a, 41b, 41c, 41d, 41e) mindestens mit einem der Frequenzreduktionsbereiche einer anderen der Tilgergruppen (41a, 41b, 41c, 41d, 41e) überlappt.

2. Schwingungstilgeranordnung (40; 140) nach Anspruch 1, wobei die einzelnen Schwingungstilger (42a, 42b, 42c, 42d, 42e) der jeweiligen Tilgergruppe (41a, 41b, 41c, 41d, 41e) ringförmig angeordnet sind.

3. Schwingungstilgeranordnung (40) nach Anspruch 1 oder 2, wobei das erste Bauelement ein Windenergieanlagen-Turm (10) ist und das Anschlussende (11) ein oberes Ende des Windenergieanlagen-Turms (10) zum Stützen der Windenergieanlagen-Gondel (20) ist.

4. Schwingungstilgeranordnung (40) nach Anspruch 3, wobei benachbarte Tilgergruppen (41a, 41b, 41c, 41d, 41e) entlang der Längsrichtung (LD) um weniger als 300 cm voneinander beabstandet sind, und/oder
wobei die einzelnen Schwingungstilger (42a, 42b, 42c, 42d, 42e) innerhalb der jeweiligen Tilgergruppe (41a, 41b, 41c, 41d, 41e) entlang der Umfangsrichtung (CD) um weniger als 200 cm voneinander beabstandet sind.

5. Schwingungstilgeranordnung (140) nach Anspruch 1 oder 2, wobei das zweite Bauelement die Windenergieanlagen-Gondel (20) mit einer Rotornabe (21) ist,
**dadurch gekennzeichnet, dass** das erste Bauelement ein Windenergieanlagen-Rotorblatt (30) ist, wobei das Anschlussende eine Blattwurzel (31) zur Befestigung an der Rotornabe (21) ist.

6. Schwingungstilgeranordnung (140) nach Anspruch 5, wobei benachbarte Tilgergruppen entlang der Längsrichtung um weniger als 300 cm voneinander beabstandet sind, und/oder
wobei die einzelnen Schwingungstilger innerhalb der jeweiligen Tilgergruppe entlang der Umfangsrichtung um weniger als 100 cm voneinander beabstandet sind.

7. Schwingungstilgeranordnung (40; 140) nach einem der vorhergehenden Ansprüche, wobei die einzelnen Schwingungstilger (42a, 42b, 42c, 42d, 42e) innerhalb der jeweiligen Tilgergruppe (41a, 41b, 41c, 41d, 41e) die gleiche Eigenfrequenz aufweisen und/oder vom gleichen Typ sind.

8. Schwingungstilgeranordnung (40; 140) nach einem der vorhergehenden Ansprüche, wobei die Schwingungstilgeranordnung (40; 140) komplett in dem Endabschnitt (12; 32) angeordnet ist.

9. Schwingungstilgeranordnung (40; 140) nach einem der vorhergehenden Ansprüche, wobei mindestens einer der Tilgergruppen (41a, 41b, 41c, 41d, 41e) in einem Bereich angeordnet ist, der sich von dem Anschlussende (11; 31) ausgehend über 10 % einer Gesamtlänge (L10; L30) des ersten Bauelements (10; 30) entlang der Längsrichtung (LD) erstreckt.

10. Schwingungstilgeranordnung (40; 140) nach Anspruch 9, wobei mindestens zwei der Tilgergruppen (41a, 41b, 41c, 41d, 41e) in dem Bereich angeordnet ist, der sich von dem Anschlussende (11; 31) ausgehend über 10 % der Gesamtlänge (L10; L30) des ersten Bauelements (10; 30) entlang der Längsrichtung (LD) erstreckt.

11. Schwingungstilgeranordnung (40; 140) nach einem der vorhergehenden Ansprüche, wobei sich der Endabschnitt (12; 32) von dem Anschlussende (11; 32) ausgehend über maximal 14% der Gesamtlänge (L10; L30) des ersten Bauelements (10; 30) entlang der Längsrichtung (LD) erstreckt.

12. Schwingungstilgeranordnung (40; 140) nach einem der vorhergehenden Ansprüche, wobei alle einzelnen Schwingungstilger (42a, 42b, 42c, 42d, 42e) passive Schwingungstilger sind.

13. Windenergieanlage (1), **dadurch gekennzeichnet, dass** die Windenergieanlage (1) eine Schwingungstilgeranordnung (40; 140) nach einer der vorhergehenden Ansprüche umfasst.

## Claims

1. Vibration damper arrangement (40; 140) for an elongated first component (10; 30) which is arranged at a connection end (11; 31) along a longitudinal direction (LD) of the first component (10; 30) for mechanical connection to a second component (20), wherein the second component (20) is a wind turbine nacelle with a drive train (22, 23),
wherein the vibration damper arrangement (40; 140) comprises at least three damper groups (41a, 41b, 41c, 41d, 41e) which are arranged in an end section (12; 32) of the first component (10; 30) with the connection end (11; 31) and are spaced apart from one another along the longitudinal direction (LD),
wherein each of the damper groups (41a, 41b, 41c, 41d, 41e) comprises a plurality of individual vibration dampers (42a, 42b, 42c, 42d, 42e) which are arranged distributed along a circumferential direction (CD) on a circumferential wall (14) of the first component (10; 30),
wherein the natural frequencies of the respective individual vibration damper (42a, 42b, 42c, 42d, 42e) are defined based on a damper mass and a stiffness of the individual vibration damper (42a, 42b, 42c, 42d, 42e),
wherein the vibration damper arrangement (40; 140) is configured to reduce, locally in the end section (12; 32) at the connection end (11; 31), the transmission of vibrations due to vibrations of the drive train (22, 23),
**characterized in that** the damper groups (41a, 41b, 41c, 41d, 41e) have natural frequencies differing from one another, and the individual vibration dampers (42a, 42b, 42c, 42d, 42e) of a respective damper group (41a, 41b, 41c, 41d, 41e) differ in their damper mass and/or their stiffness from the individual vibration dampers (42a, 42b, 42c, 42d, 42e) of the other damper groups (41a, 41b, 41c, 41d, 41e), and
that the respective damper group (41a, 41b, 41c, 41d, 41e) has a frequency reduction range around its natural frequency, wherein the frequency reduction ranges of a respective one of the absorber groups (41a, 41b, 41c, 41d, 41e) overlap with at least one of the frequency reduction ranges of another of the absorber groups (41a, 41b, 41c, 41d, 41e).

2. Vibration damper arrangement (40; 140) according to claim 1, wherein the individual vibration dampers (42a, 42b, 42c, 42d, 42e) of the respective damper groups (41a, 41b, 41c, 41d, 41e) are arranged in a ring shape.

3. Vibration damper arrangement (40) according to claim 1 or 2, wherein the first component is a wind turbine tower (10), and the connecting element (11) is an upper end of the wind turbine tower (10) for supporting the wind turbine nacelle (20).

4. Vibration damper arrangement (40) according to claim 3, wherein adjacent damper groups (41a, 41b, 41c, 41d, 41e) are spaced apart by less than 300 cm along the longitudinal direction (LD), and/or
wherein the individual vibration dampers (42a, 42b, 42c, 42d, 42e) within the respective damper group (41a, 41b, 41c, 41d, 41e) are spaced apart from one another by less than 200 cm along the circumferential direction (CD).

5. Vibration damper arrangement (140) according to claim 1 or 2, wherein the second component is the wind turbine nacelle (20) with a rotor hub (21),
**characterized in that** the first component is a wind turbine rotor blade (30), wherein the connection end is a blade root (31) for attachment to the rotor hub (21).

6. Vibration damper arrangement (140) according to claim 5, wherein adjacent damper groups are spaced apart by less than 300 cm along the longitudinal direction, and/or
wherein the individual vibration dampers within the respective damper group are spaced apart by less than 100 cm along the circumferential direction.

7. Vibration damper arrangement (40; 140) according to any one of the preceding claims, wherein the individual vibration dampers (42a, 42b, 42c, 42d, 42e) within the respective damper group (41a, 41b, 41c, 41d, 41e) have the same natural frequency and/or are of the same type.

8. Vibration damper arrangement (40; 140) according to one of the preceding claims, wherein the vibration damper arrangement (40; 140) is arranged completely in the end section (12; 32).

9. Vibration damper arrangement (40; 140) according to one of the preceding claims, wherein at least one of the damper groups (41a, 41b, 41c, 41d, 41e) is arranged in a region which extends from the connection end (11; 31) over 10 % of a total length (L10; L30) of the first component (10; 30) along the longitudinal direction (LD).

10. Vibration damper arrangement (40; 140) according to claim 9, wherein at least two of the damper groups (41a, 41b, 41c, 41d, 41e) are arranged in the region extending from the connection end (11; 31) over 10 % of the total length (L10; L30) of the first component (10; 30) along the longitudinal direction (LD).

11. Vibration damper arrangement (40; 140) according to any one of the preceding claims, wherein the end section (12; 32) extends from the connection end (11; 32) over a maximum of 14 % of the total length (L10; L30) of the first component (10; 30) along the longitudinal direction (LD).

12. Vibration damper arrangement (40; 140) according to any one of the preceding claims, wherein all individual vibration dampers (42a, 42b, 42c, 42d, 42e) are passive vibration dampers.

13. Wind turbine (1), **characterized in that** the wind turbine (1) comprises a vibration damper arrangement (40; 140) according to any one of the preceding claims.

## Revendications

1. Dispositif amortisseur de vibrations (40 ; 140) pour un premier composant allongé (10 ; 30), lequel est conçu pour la connexion mécanique, à une première extrémité de raccord (11 ; 31) le long d'une direction longitudinale (LD) du premier composant (10 ; 30), avec un second composant (20), le second composant (20) étant une cabine d'éolienne comprenant un groupe motopropulseur (22, 23),
le dispositif amortisseur de vibrations (40 ; 140) comprenant au moins trois groupes d'amortisseurs (41a, 41b, 41c, 41d, 41e), lesquels sont disposés dans une section d'extrémité (12 ; 32) du premier composant (10 ; 30) comprenant l'extrémité de raccord (11 ; 31) et étant espacés les uns des autres le long de la direction longitudinale (LD),
chacun des groupes d'amortisseurs (41a, 41b, 41c, 41d, 41e) comprenant une pluralité d'amortisseurs de vibrations individuels (42a, 42b, 42c, 42d, 42e), qui sont disposés sur une paroi périphérique (14) du premier composant (10 ; 30) distribués dans une direction circonférentielle (CD),
les fréquences propres de l'amortisseur de vibrations individuel (42a, 42b, 42c, 42d, 42e) respectif étant conçues au moyen d'une masse d'amortissement et d'une rigidité de l'amortisseur de vibrations individuel (42a, 42b, 42c, 42d, 42e),
le dispositif amortisseur de vibrations (40 ; 140) étant conçu pour réduire une transmission de vibrations due à des oscillations du groupe motopropulseur (22, 23) localement dans la section d'extrémité (12 ; 32) à l'extrémité de raccord (11 ; 31),
**caractérisé en ce que** les groupes d'amortisseurs (41a, 41b, 41c, 41d, 41e) présentent des fréquences propres différentes les unes des autres, et les amortisseurs de vibrations individuels (42a, 42b, 42c, 42d, 42e) d'un groupe d'amortisseurs (41a, 41b, 41c, 41d, 41e) respectif diffèrent dans leur masse d'amortissement et/ou dans leur rigidité des amortisseurs de vibrations (42a, 42b, 42c, 42d, 42e) des autres groupes d'amortisseurs (41a, 41b, 41c, 41d, 41e), et **en ce que** le groupe d'amortisseurs (41a, 41b, 41c, 41d, 41e) respectif présente une plage de réduction de fréquence autour de sa fréquence propre, les plages de réduction de fréquence d'un groupe respectif des groupes d'amortisseurs (41a, 41b, 41c, 41d, 41e) chevauchant au moins une des plages de réduction de fréquence d'un autre des groupes d'amortisseurs (41a, 41b, 41c, 41d, 41e).

2. Dispositif amortisseur de vibrations (40 ; 140) selon la revendication 1, dans lequel les amortisseurs de vibrations individuels (42a, 42b, 42c, 42d, 42e) du groupe d'amortisseurs (41a, 41b, 41c, 41d, 41e) respectif sont disposés en forme annulaire.

3. Dispositif amortisseur de vibrations (40) selon la revendication 1 ou 2, dans lequel le premier composant est une tour d'éolienne (10) et l'extrémité de raccord (11) est une extrémité supérieure de la tour d'éolienne (10) pour le support de la cabine d'éolienne (20).

4. Dispositif amortisseur de vibrations (40) selon la revendication 3, dans lequel des groupes d'amortisseurs (41a, 41b, 41c, 41d, 41e) adjacents sont espacés de moins de 300 cm les uns des autres le long de la direction longitudinale (LD), et/ou
dans lequel les amortisseurs de vibrations individuels (42a, 42b, 42c, 42d, 42e) dans le groupe d'amortisseurs (41a, 41b, 41c, 41d, 41e) sont espacés de moins de 200 cm les uns des autres le long de la direction circonférentielle (CD).

5. Dispositif amortisseur de vibrations (140) selon la revendication 1 ou 2, dans lequel le second composant est la cabine d'éolienne (20) avec un moyeu de rotor (21), **caractérisé en ce que** le premier composant est une pale de rotor d'éolienne (30), où l'extrémité de raccord est un pied de pale (31) pour la fixation au moyeu de rotor (21).

6. Dispositif amortisseur de vibrations (140) selon la revendication 5, dans lequel des groupes d'amortisseurs adjacents sont espacés de moins de 300 cm les uns des autres le long de la direction longitudinale, et/ou
dans lequel les amortisseurs de vibrations dans le groupe d'amortisseurs respectif sont espacés de moins de 100 cm les uns des autres le long de la direction circonférentielle.

7. Dispositif amortisseur de vibrations (40 ; 140) selon l'une quelconque des revendications précédentes, dans lequel les amortisseurs de vibrations individuels (42a, 42b, 42c, 42d, 42e) dans le groupe d'amortisseurs (41a, 41b, 41c, 41d, 41e) respectif présentent la même fréquence propre et/ou sont du même type.

8. Dispositif amortisseur de vibrations (40 ; 140) selon l'une quelconque des revendications précédentes, dans lequel le dispositif amortisseur de vibrations (40 ; 140) est disposé entièrement dans la section d'extrémité (12 ; 32).

9. Dispositif amortisseur de vibrations (40 ; 140) selon l'une quelconque des revendications précédentes, dans lequel au moins un des groupes d'amortisseurs (41a, 41b, 41c, 41d, 41e) est disposé dans une zone qui s'étend, en partant de l'extrémité de raccord (11 ; 31), sur 10% d'une longueur totale (L10, L30) du premier composant (10 ; 30) le long de la direction longitudinale (LD).

10. Dispositif amortisseur de vibrations (40 ; 140) selon la revendication 9, dans lequel au moins deux des groupes d'amortisseurs (41a, 41b, 41c, 41d, 41e) sont disposés dans la zone qui s'étend, en partant de l'extrémité de raccord (11 ; 31), sur 10% de la longueur totale (L10, L30) du premier composant (10 ; 30) le long de la direction longitudinale (LD).

11. Dispositif amortisseur de vibrations (40 ; 140) selon l'une quelconque des revendications précédentes, dans lequel au moins un des groupes d'amortisseurs (12 ; 32) est disposé dans une zone qui s'étend, en partant de l'extrémité de raccord (11 ; 32), sur 14% d'une longueur totale (L10, L30) du premier composant (10 ; 30) le long de la direction longitudinale (LD).

12. Dispositif amortisseur de vibrations (40 ; 140) selon l'une quelconque des revendications précédentes, dans lequel tous les amortisseurs de vibrations individuels (42a, 42b, 42c, 42d, 42e) sont des amortisseurs de vibrations passifs.

13. Éolienne (1), **caractérisée en ce que** l'éolienne (1) comprend un dispositif amortisseur de vibrations (40 ; 140) selon l'une quelconque des revendications précédentes.
